# EUROPEAN PATENT SPECIFICATION

(11) **EP 1 343 364 B1**
(45) Date of publication and mention of the grant of the patent: **12.04.2006**
(21) Application number: 01271140.4
(22) Date of filing: 10.12.2001
(51) Int. Cl.: A01D 43/10

(54) **MOWER/CONDITIONER APPARATUS**
MAH-UND KONDITIONERAPPARAT
FAUCHEUSE-CONDITIONNEUSE

(30) Priority: 18.12.2000 GB 0030787
(43) Date of publication of application: 17.09.2003
(73) Proprietor: Kverneland Kerteminde A/S, 5300 Kerteminde (DK)
(72) Inventor: LAURITZEN, Georg, Agertoft, DK-5300 Kerteminde (DK)
(74) Representative: Orr, William McLean
(86) International application number: PCT/GB2001/005451
(87) International publication number: WO 2002/049415

(56) References cited:
- EP-A- 0 074 451
- EP-A- 0 238 159
- DE-A- 1 782 799
- DE-A- 3 827 332
- DE-A- 4 432 663
- DE-C- 19 931 684
- FR-A- 2 559 344
- NL-C- 1 008 026
- US-A- 2 811 003
- US-A- 4 099 364

## Description

This invention relates to a mower/conditioner apparatus which comprises a cutter bar, and a tandem arrangement of conditioner units located behind the cutter bar and arranged side by side to extend transversely of the direction of forward travel.

It is well known to arrange a conditioner unit rearwardly of a transversely extending cutter bar e.g. in a disc mower arrangement, and to feed mown grass (or other standing crop) cut by the cutter bar to the conditioner unit so as to apply a "conditioning" action on the mown crop (the conditioner, and the cutter bar, can also be arranged side by side and offset in the working direction). The "conditioned" crop is then discharged onto the ground rearwardly of the conditioner unit in the form of a "swath".

The construction and operation of cutter bars and conditioner units will be well known to those of ordinary skill in the art, and therefore do not need to be described in detail herein. The document DE-C-18931684 discloses a mower/conditioner apparatus comprising a front and two side mower/conditioners wherein the side units are provided with a transfer device to transfer the crop to the middle swath.

However, the present invention is concerned with a mower/conditioner apparatus having a pair of conditioner units which are laterally spaced from each other (with respect to the direction of forward travel), and rearwardly of a forward cutter bar (or more than one cutter bar if preferred i.e. a separate cutter bar associated with each conditioner unit), and seeks to provide an improved means for discharging the conditioned crop from the two conditioner units.

Thus, in known apparatus having a tandem arrangement of conditioner units, with each conditioner unit being arranged to discharge the conditioned crop in a rearward direction, either two separate swaths are formed or, with suitable guide arrangements (swath boards) a combined single swath can be formed.

The invention seeks to provide an improved means for guiding the discharge of conditioned crop from the two conditioner units, and in such a way that a single swath is formed and of a width which is considerably smaller e.g. half the width of the cutter bar(s).

According to the invention there is provided a mower/conditioner apparatus which comprises:
a transversely extending cutter bar;
first and second conditioner units located behind the cutter bar which are laterally spaced from each other with respect to the direction of forward travel, and with each conditioner unit being arranged (a) to receive mown crop from the cutter bar, (b) to condition the crop and (c) to discharge the conditioned crop in a rearward direction; and
a transfer device arranged rearwardly of the first conditioner unit to receive conditioned crop from the first unit and to transfer the conditioned crop in a direction transversely of the direction of travel and towards the second conditioner unit so that, in combination with the stream of conditioned crop being discharged from the second conditioner unit, there is formed a single two-layered swath behind the apparatus, and in which the underlying layer is derived, wholly or mainly, from the crop conditioned by the first conditioner unit.

The invention therefore enables a single swath to be formed behind the apparatus, of lesser width than the width of the cutter bar, and without need to apply high speed transverse movement to the conditioned crop from the first conditioner unit. This is because the conditioned crop can be discharged to one side of the rear of the second conditioner unit, and underneath the stream of conditioned crop which is being discharged from the second conditioner unit.

In addition to the advantage of reduced speed required to be imparted to the movement of the conditioned crop from the first conditioner unit (a higher speed would be necessary in the event that it should be required to discharge the conditioned crop from the first conditioner unit above the stream of conditioned crop being discharged from the second conditioner unit), there are two further advantages which may be achieved. Thus, if, as may be preferred, swath boards are attached to the second conditioner unit, and if any conditioned crop may unintentionally fall onto the ground too early i.e. not be directed to a required position on the ground at which the swath is to be formed, such escaping material (possibly 5 to 10% of the total from the second conditioner unit) is engaged by the stream of conditioned crop from the transfer device associated with the first conditioner unit, and is transferred onto the ground where the swath is required, and underneath the stream of the main portion of conditioned crop being discharged from the second conditioner unit.

Furthermore, because the transfer device is located rearwardly of the first conditioner unit, and in a position so that it can readily receive the material from the first conditioner unit, the overall design of the apparatus, including the transfer device, can be kept relatively compact/short.

The transfer device can take any suitable form, in order to move the conditioned crop from the first conditioner unit in a transverse direction onto the ground behind the second conditioner unit and underneath the stream of crop being discharged from the second conditioner unit. Examples of device which may be used include an endless conveyor, an auger, and an arrangement of transfer rollers.

The apparatus of the invention may be provided with a single cutter bar, extending transversely throughout the width of the apparatus, so that one half of the cutter bar is associated with the first conditioner unit, and the other half is associated with the second conditioner unit. Alternatively, separate cutter bar sections may be associated with each conditioner unit.

The cutter bar(s) may take any suitable form as used in existing designs of grass mowing machines, including disc mowers.

Preferably, the first and second conditioner units are arranged side by side with respect to the direction of forward travel, so that the conditioned crop from the first conditioner unit is transferred by the transfer device so as to fall onto the ground behind the second conditioner unit and underneath the stream of conditioned crop being discharged from the second conditioner unit.

However, in an alternative arrangement, the first and second conditioner units are laterally and also longitudinally spaced apart from each other, with respect to the direction of forward travel but arranged in such a way that at least the major portion of the underlying layer of the 2-layered swath is derived from the first conditioner unit.

Therefore, in one alternative arrangement, the first conditioner unit may be spaced forwardly of the second conditioner unit by a small distance, provided that the transfer device is able to discharge the conditioned crop from the first conditioner unit onto the ground and behind the second conditioner unit so as to form (wholly or at least mainly) the underlying layer of the 2-layered swath formed behind the apparatus.

However, in a further arrangement, the second conditioner unit may be spaced forwardly of the first conditioner unit (so that the transfer device is able to discharge the conditioned crop from the first conditioner unit onto the ground and behind the second conditioner unit), but in which the first and second conditioner units form a unitary assembly which is (a) towed behind a propelling vehicle or (b) front-mounted on a propelling vehicle.

Preferred embodiments of the invention will now be described in detail, by way of example only, with reference to the accompanying schematic drawings, in which:
Figure 1 is a schematic and perspective illustration of a mower/conditioner apparatus according to the invention, having a tandem arrangement of conditioner units arranged side by side, and with improved guiding means to discharge conditioned crop from each of the conditioner units to form a single two-layered swath of conditioned crop behind the apparatus;
Figure 2 is a schematic plan view of the apparatus;
Figure 3 is a schematic side view of the apparatus; and
Figure 4 is a schematic plan view of an alternative embodiment.

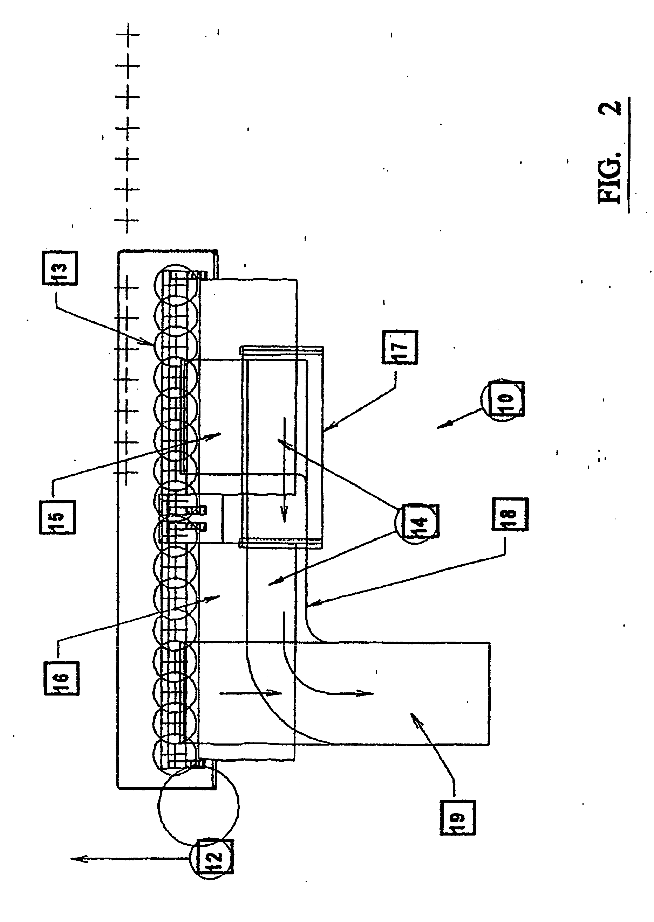

Referring now to the drawings, a preferred embodiment of mower/conditioner apparatus according to the invention is designated generally by reference 10, and comprises a forward cutter bar 11, extending transversely of the direction of forward travel 12, and in the schematic illustration of Figure 2 taking the form of a series of laterally spaced mower discs 13. Mower discs 13 are well known for use in disc type mowers, and will not be described in detail herein. Also, although Figure 2 shows schematically a single cutter bar 11, the invention includes the possibility of providing separate cutter bar sections, each associated with a respective conditioner unit located behind it

A tandem arrangement of conditioner units 14 is therefore provided, and which comprises a first conditioner unit 15 located behind a right hand half of the cutter bar 11, and a second conditioner unit 16 arranged behind the left hand half of the cutter bar 11.

The conditioner units 15 and 16 therefore are located behind the cutter bar 11, and are arranged side by side to extend transversely of the direction of forward travel 12. Each conditioner unit 15, 16 is arranged a) to receive mown crop from the cutter bar 11, b) to "condition" the crop and c) to discharge the conditioned crop in a rearward direction.

A transfer device 17 is arranged rearwardly of the first conditioner unit 15 to receive conditioned crop from the first conditioner unit and to transfer the conditioned crop in a direction, shown by arrows 18, which is transversely of the direction of forward travel 12 and towards the second conditioner unit 16. The transfer device 17 can take any suitable form, including an endless belt, an auger or a series of transfer rollers. It can be seen from Figure 2 that the transfer device 17 extends substantially throughout the width of the first conditioner unit 15, and transfers the conditioned crop in the direction of the arrows 18 so as to fall onto the ground behind the second conditioner unit 16 and underneath the stream of conditioned crop which is being discharged from the second conditioner unit 16. Some of the material from the conditioner unit 15 can fall onto the ground even beyond the conditioner unit 16; and material may also fall onto the ground partly behind the unit 15 and partly behind the unit 16.

Therefore, a single two-layered swath 19 can be formed behind the apparatus 10, and which evidently is of lesser width than the width of the cutter bar 11, and furthermore without need to apply high speed transverse movement to the conditioned crop being discharged from the first conditioner unit. This is because the conditioned crop from the first conditioner unit is discharged to one side of the rear of the second conditioner unit 16, and underneath the stream of conditioned crop which is being discharged from the second conditioner unit i.e. the underlying layer of the 2-layered swath is derived wholly, or at least mainly from the conditioned crop from the first conditioner unit 15.

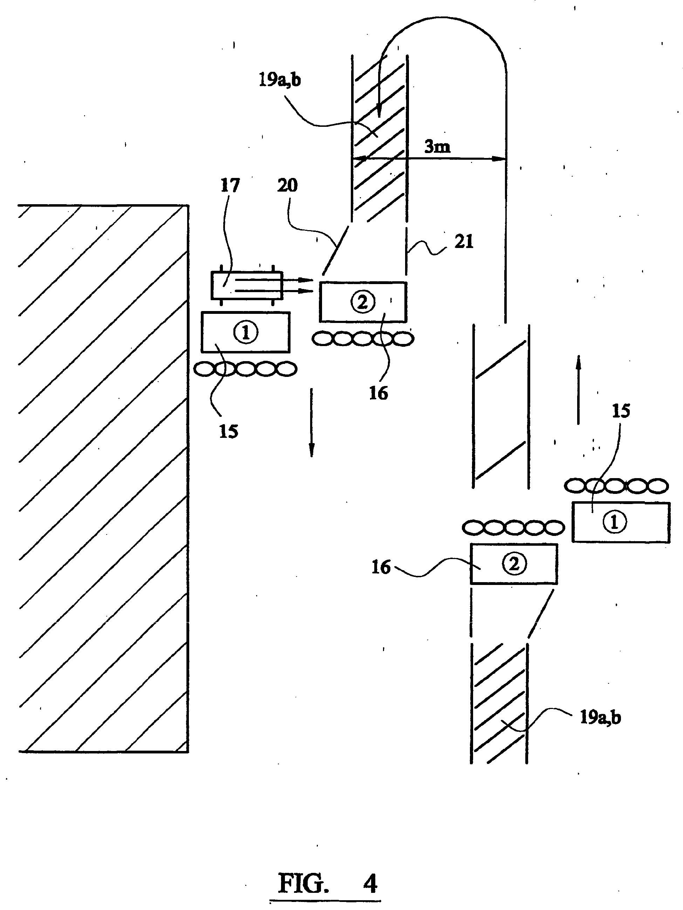

If, as may be preferred (see Figure 4), swath boards are attached to the second conditioner unit 16, and in the event that any small proportion of material discharged from the second conditioner unit escapes i.e. falls downwardly too early i.e. not towards the required location of the two layered swath, such material is readily grasped by the material coming from the transfer device 17 and then directed to fall under gravity onto the ground underneath the main stream of material from the second conditioner unit 16.

The apparatus 10 also has the advantage of providing an overall construction which is compact, by virtue of the arrangement disclosed herein.

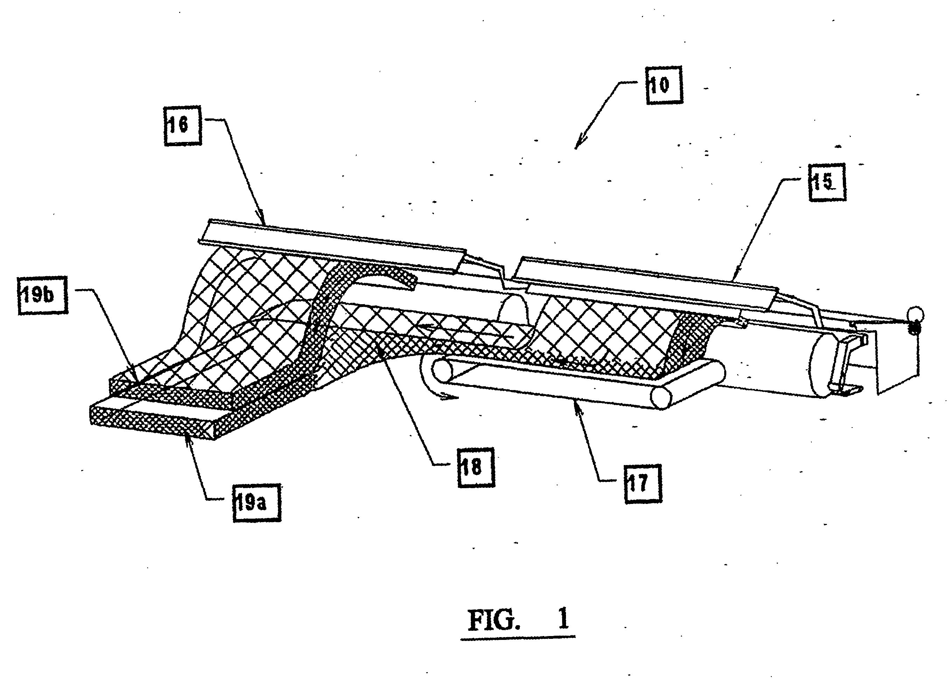

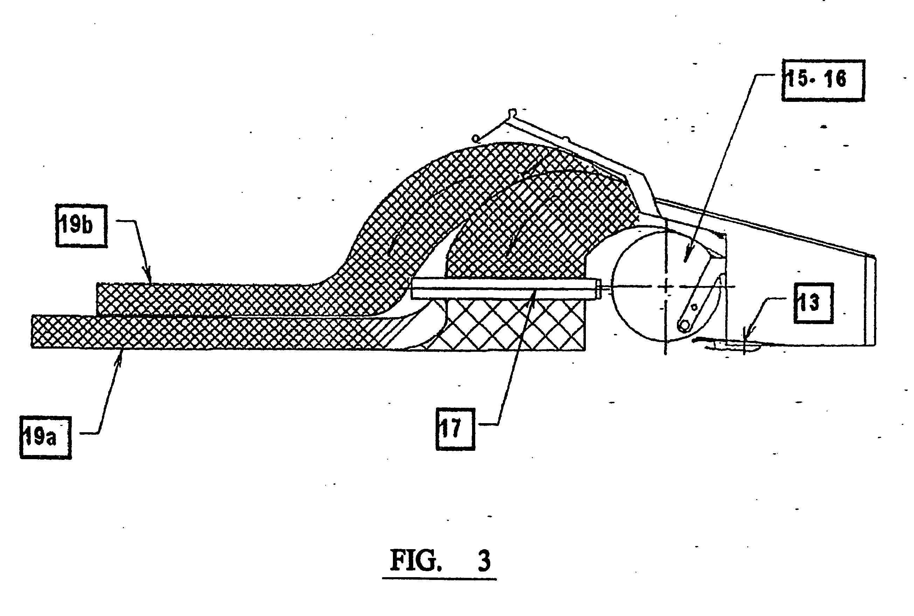

Figure 2 is a schematic plan view of the apparatus, and Figures 1 and 3 are schematic illustrations of the means by which a single two-layer swath 19 is formed, comprising lower layer 19a derived (wholly or mainly) from the first conditioner unit 15, and upper layer 15b derived from the second conditioner unit 16.

Preferably, as shown in Figures 1 to 3 of the drawings, the first and second conditioner units 15, 16 are arranged side by side with respect to the direction of forward travel 12. However, it is within the scope of this invention for the conditioner units 15, 16 also to be spaced apart from each other with respect to the direction of forward travel 12 (see Figure 4).

Thus, shown in Figure 4, first conditioner unit 15 is spaced a short distance forwardly of second conditioner unit 16, with respect to the direction of forward travel, but the conditioned crop coming from the first conditioner unit 15 is conveyed laterally by the transfer device 17 so that it can fall under gravity onto the ground behind the second conditioner unit 16, and forming the underlying layer 19a, wholly or at least mainly, of the 2-layered swath.

Also, shown in Figure 4, the second conditioner unit 16 has swath boards 20 and 21, which direct the conditioned crop which is being discharged rearwardly of the second conditioner unit 16, and so as to form, at least mainly, the upper layer 19b of the 2-layer swath. In the event that the swath board 20 may happen to cause some of the conditioned crop from the second conditioner unit 16 to tend to escape i.e. to fall downwardly under gravity too soon, such material is engaged by the material being discharged laterally by the transfer device 17, and is carried over so as to form together the underlying layer 19a.

Figure 4 also shows diagrammatically how the tandem arrangement of conditioner units 15 and 16 can carry out successive working parts of movements, in opposite directions, to give an advantageous gathering of known crop, and joint formation of a single 2-layered swath by the two paths of movement.

It is preferred that the conditioner units 15 and 16 form a unitary assembly which can be towed behind a propelling vehicle. Alternatively, the unitary assembly may be front mounted on a propelling vehicle.

Also, although not shown, the illustrated embodiment shown in the drawings may be modified such that the swath deposited by the conditioner 16 can be laid on the left hand side of the conditioner unit 16 (by its swath boards), and the material from the conditioner 15 can be laid on the right hand side of conditioner 16 (together with the material falling from the swath boards i.e. they do not form partly one on the other.

## Claims

1. A mower/conditioner apparatus (10) which comprises:
a cutter bar (11) extending transversely of the direction of forward travel (12);
a tandem arrangement of conditioner units (14) located behind the cutter bar (11) and comprising first and second conditioner units (15, 16) which are laterally spaced from each other with respect to the direction of forward travel (12), and with each conditioner unit (15, 16) being arranged (a) to receive mown crop from the cutter bar (11), (b) to condition the crop and (c) to discharge the conditioned crop in a rearward direction; and
a transfer device (17) arranged rearwardly of the first conditioner unit (15) to receive conditioned crop from the first unit (15) and to transfer the conditioned crop in a direction (18) transversely of the direction of forward travel (12) and towards the second conditioner unit (16) so that, in combination with the stream of conditioned crop being discharged from the second conditioner unit (16) there is formed a single two-layered swath (19a, 19b) behind the apparatus (10), and in which the underlying layer is derived, wholly or mainly, from the crop conditioned by the first conditioner unit (15).

2. Apparatus according to claim 1, in which the transfer device comprises an endless belt, an auger, or an arrangement of transfer rollers.

3. Apparatus according to claim 1 or 2, in which the cutter bar (11) comprises a single bar extending throughout the width of the apparatus.

4. Apparatus according to claim 3, in which the cutter bar (11) comprises an arrangement of cutter discs (13).

5. Apparatus according to anyone of the preceding claims, in which the second conditioner unit (16) includes swath-forming guides (20) which guide the rearward discharge of conditioned crop from the second conditioner unit (16).

6. Apparatus according to any one of the preceding claims, in which the first and second conditioner units (15, 16) are spaced apart from each other with respect to the direction of forward travel (12).

7. Apparatus according to any one of claims 1 to 5, in which the first and second conditioner units (15, 16) are arranged side by side with respect to the direction of forward travel (12) so that conditioned crop from the first conditioner unit (15) is transferred by the transfer device (17) onto the ground behind the second conditioner unit (16) and underneath the stream of conditioned crop being discharged from the second conditioner unit (16).

8. Apparatus according to any one of claims 1 to 5, in which the first and second conditioner units 15, 16 form a unitary assembly which is adapted to be (a) towed behind a propelling vehicle or (b) front mounted on a propelling vehicle.

9. Apparatus according to claim 8, in which the second conditioner unit 16 is spaced forwardly of the first conditioner unit 15.

## Patentansprüche

1. Mäh-/Aufbereitungsvorrichtung (10), welche umfasst:
eine Schneidleiste (11), welche sich querverlaufend zu der Richtung der Vorwärtsbewegung (12) erstreckt;
eine Tandemanordnung von Aufbereitungseinheiten (14), welche hinter der Schneidleiste (11) angeordnet ist und welche erste und zweite Aufbereitungseinheiten (15, 16) umfasst, die seitlich entfernt voneinander in Bezug auf die Richtung der Vorwärtsbewegung (12) sind, und wobei jede Aufbereitungseinheit (15, 16) ausgestaltet ist, um (a) den gemähten Schnitt von der Schneidleiste (11) aufzunehmen, um (b) den Schnitt aufzubereiten und um (c) den aufbereiteten Schnitt in einer rückwärtigen Richtung zu entladen; und
eine Übertragungsvorrichtung (17), welche hinter der ersten Aufbereitungseinheit (15) angeordnet ist, um den aufbereiteten Schnitt von der ersten Einheit (15) aufzunehmen und um den aufbereiteten Schnitt in einer Richtung (18) quer zu der Richtung der Vorwärtsbewegung (12) und in Richtung der zweiten Aufbereitungseinheit (16) zu übertragen, so dass, in Verbindung mit dem Strom des von der zweiten Aufbereitungseinheit (16) entladenen aufbereiteten Schnitts, eine einfache zweilagige Mähschwade (19a, 19b) hinter der Vorrichtung (10) gebildet wird, und in welcher die unten liegende Schicht gänzlich oder hauptsächlich von dem von der ersten Aufbereitungseinheit (15) aufbereiteten Schnitt gewonnen wird.

2. Vorrichtung nach Anspruch 1, in welcher die Übertragungsvorrichtung ein Endlosband, eine Einzugschnecke oder eine Anordnung von Übertragungsrollen umfasst.

3. Vorrichtung nach Anspruch 1 oder 2, in welcher die Schneidleiste (11) einen einzelnen Stab umfasst, welcher sich über die ganze Breite der Vorrichtung erstreckt.

4. Vorrichtung nach Anspruch 3, in welcher die Schneidleiste (11) eine Anordnung von Schneidscheiben (13) umfasst.

5. Vorrichtung nach einem der vorhergehenden Ansprüche, in welcher die zweite Aufbereitungseinheit (16) Mähschwaden formende Führungen (20) umfasst, welche das rückwärtige Entladen des aufbereiteten Schnitts von der zweiten Aufbereitungseinheit (16) führt.

6. Vorrichtung nach einem der vorhergehenden Ansprüche, in welcher die ersten und zweiten Aufbereitungseinheiten (15, 16) in Bezug auf die Richtung der Vorwärtsbewegung (12) voneinander beabstandet sind.

7. Vorrichtung nach einem der Ansprüche 1 bis 5, in welcher die ersten und zweiten Aufbereitungseinheiten (15, 16) nebeneinander in Bezug auf die Richtung der Vorwärtsbewegung (12) derart angeordnet sind, dass der aufbereitete Schnitt von der ersten Aufbereitungseinheit (15) durch die Übertragungsvorrichtung (17) auf den Boden hinter der zweiten Aufbereitungseinheit (16) und unterhalb des Stroms des aufbereiteten Schnitts, der von der zweiten Aufbereitungseinheit (16) entladen wird, übertragen wird.

8. Vorrichtung nach einem der Ansprüche 1 bis 5, in welcher die ersten und zweiten Aufbereitungseinheiten (15, 16) eine einheitliche Anordnung bilden, welche ausgestaltet ist, um (a) hinter einem Antriebsfahrzeug gezogen zu werden, oder um (b) vor einem Antriebsfahrzeug angebracht zu werden.

9. Vorrichtung nach Anspruch 8, in welcher die zweite Aufbereitungseinheit (16) beabstandet vor der ersten Aufbereitungseinheit (15) angeordnet ist.

## Revendications

1. Appareil formant faucheuse-conditionneuse (10) comprenant :
une barre de coupe (11) qui s'étend transversalement par rapport au sens de la marche avant (12) ;
une disposition en tandem d'unités de conditionnement (14) montées derrière la barre de coupe (11) et comprenant des première et seconde unités de conditionnement (15, 16) latéralement espacées les unes des autres par rapport au sens de la marche avant (12), chaque unité de conditionnement (15, 16) étant conçue pour (a) recevoir des récoltes de fourrage de la barre de coupe (11), (b) conditionner les récoltes, et (c) décharger les récoltes ainsi conditionnées vers l'arrière ; et
un dispositif de transfert (17) monté à l'arrière de la première unité de conditionnement (15) pour recevoir les récoltes conditionnées de la première unité (15) et transférer les récoltes conditionnées dans une direction (18) transversale par rapport au sens de la marche avant (12) et vers la seconde unité de conditionnement (16) de sorte qu'en combinaison avec le jet de récoltes conditionnées déchargées de la première unité de conditionnement (16), un andain (19a, 19b) bicouche unique se forme derrière l'appareil (10), tout ou partie de la couche sous-jacente de celui-ci provenant des récoltes conditionnées par la première unité de conditionnement (15).

2. Appareil selon la revendication 1, dans lequel le dispositif de transfert comprend une courroie sans fin, une tarière ou des rouleaux de transfert.

3. Appareil selon la revendication 1 ou 2, dans lequel la barre de coupe (11) comprend une barre unique s'étendant sur toute la largeur de l'appareil.

4. Appareil selon la revendication 3, dans lequel la barre de coupe (11) comprend un agencement de disques de coupe (13).

5. Appareil selon l'une quelconque des revendications précédentes, dans lequel la seconde unité de conditionnement (16) comprend des guides de formation d'andain (20) qui guident le déchargement vers l'arrière des récoltes de fourrage provenant de la seconde unité de conditionnement (16).

6. Appareil selon l'une quelconque des revendications précédentes, dans lequel les première et seconde unités de conditionnement (15, 16) sont espacées l'une de l'autre par rapport au sens de la marche avant (12).

7. Appareil selon l'une quelconque des revendications 1 à 5, dans lequel les première et seconde unités de conditionnement (15, 16) sont disposées côte à côte par rapport au sens de la marche avant (12) afin que les récoltes de fourrage provenant de la première unité de conditionnement (15) soient transférées par le dispositif de transfert (17) sur le sol, derrière la seconde unité de conditionnement (16) et sous le jet de récoltes conditionnées déchargées de la seconde unité de conditionnement (16).

8. Appareil selon l'une quelconque des revendications 1 à 5, dans lequel les première et seconde unités de conditionnement (15, 16) forment un ensemble unitaire susceptible d'être (a) remorqué derrière un véhicule à propulsion ou (b) monté à l'avant d'un véhicule à propulsion.

9. Appareil selon la revendication 8, dans lequel la seconde unité de conditionnement (16) est espacée, en direction de l'avant, de la première unité de conditionnement (15).
